# EUROPÄISCHE PATENTSCHRIFT

(11) **EP 2 217 826 B1**
(45) Veröffentlichungstag und Bekanntmachung des Hinweises auf die Patenterteilung: **18.04.2018**
(21) Anmeldenummer: 08860685.0
(22) Anmeldetag: 24.11.2008
(51) Int. Cl.: F16D 65/00

(54) **PNEUMATISCH UND/ODER ELEKTROMECHANISCH BETÄTIGBARE NUTZFAHRZEUGSCHEIBENBREMSE**
PNEUMATICALLY AND/OR ELECTROMECHANICALLY ACTUABLE COMMERCIAL VEHICLE DISC BRAKE
FREIN À DISQUE POUR VÉHICULE UTILITAIRE À COMMANDE PNEUMATIQUE ET/OU ÉLECTROMÉCANIQUE

(30) Priorität: 12.12.2007 DE 102007059777
(43) Veröffentlichungstag der Anmeldung: 18.08.2010
(73) Patentinhaber: Wabco Radbremsen GmbH, 68229 Mannheim (DE)
(72) Erfinder: FALTER, Wolfgang, 69118 Heidelberg (DE); JUNGMANN, Christian, 69517 Gorxheimertal (DE); STINGL, Gunter, 64367 Mühltal (DE); MÖLLER, Denny, 69118 Heidelberg (DE)
(74) Vertreter: Busch, Thomas
(86) Internationale Anmeldenummer: PCT/EP2008/009950
(87) Internationale Veröffentlichungsnummer: WO 2009/074222

(56) Entgegenhaltungen:
- EP-A- 0 565 997
- WO-A1-99/49242
- DE-A1- 4 334 914
- DE-B3- 10 356 801
- US-B1- 6 269 914
- US-B1- 6 354 407

## Beschreibung

Die Erfindung betrifft eine pneumatisch und/oder elektromechanisch betätigbare Nutzfahrzeugscheibenbremse mit
einer Bremsscheibe,
einem Bremssattel,
einer mittels eines Schwenkhebels betätigbaren und quer zu einer Drehachse der Bremsscheibe liegenden Zuspannwelle,
einer Nachstelleinrichtung, die zumindest teilweise innerhalb eines Innenraums des Bremssattels angeordnet ist, und
einer ersten Dichteinrichtung zum Abdichten eines Ringraumes, der von der Innenwand einer Durchgangsöffnung des Bremssattels und einer sich durch die Durchgangsöffnung hindurcherstreckenden Einrichtung begrenzt ist.

Scheibenbremsen der oben genannten Art sind bekannt, beispielsweise aus der DE 103 56 801 B3. Dabei ist die erste Dichteinrichtung von einer elastischen Schutzkappe in Form einer Faltenmanschette gebildet, die sich infolge Herausschraubens einer Druckspindel der Nachstelleinrichtung streckt. Sie stellt bei der bekannten Scheibenbremse die einzige Einrichtung zum Abdichten des Ringraums und damit des Innenraums des Bremssattels mit den darin befindlichen Zuspann- und Nachstellteilen gegenüber äußeren Einflüssen jeglicher Art dar. Andererseits ist sie selbst äußeren Einflüssen unterschiedlichster Art ausgesetzt. Dazu gehören beispielsweise Einflüsse mechanischer Art, wie etwa Steinschlag oder unsachgemäße Handhabung bei Servicearbeiten an der Bremse. Ferner gehören dazu Einflüsse thermischer Art durch die unmittelbare Nähe zu Bremsbelag und Bremsscheibe. Diese Einflüsse können zur Beschädigung oder gar zur Zerstörung der Faltenmanschette führen. Ist die Faltenmanschette aber beschädigt oder zerstört, sind alle Bremsenteile ungeschützt Umwelteinflüssen ausgesetzt, so daß Beeinträchtigungen oder gar Ausfall der Funktion zu befürchten sind.

Der Erfindung liegt die Aufgabe zugrunde, die Scheibenbremse nach der DE 103 56 801 B3 derart weiterzubilden, daß der Innenraum und die darin aufgenommenen Teile der Bremse wirkungsvoll geschützt sind, wobei gleichzeitig sowohl bei der Erstmontage der Bremse als auch bei etwaigem Teileaustausch eine einfache Handhabung angestrebt ist.

Erfindungsgemäß wird die gestellte Aufgabe bei einer Scheibenbremse der eingangs genannten Art durch eine Halteeinrichtung gelöst, die eine zweite Dichteinrichtung zum zumindest teilweisen Abdichten des Ringraums hält. Ferner ist eine dritte Dichteinrichtung vorgesehen, die zum zumindest teilweisen Abdichten des Ringraums an der Halteeinrichtung anliegt.

Das Vorsehen der zweiten Dichteinrichtung macht das Dichtsystem insgesamt redundant und damit wirkungsvoller. Die die zweite Dichteinrichtung haltende Halteeinrichtung vereinfacht die Handhabung sowohl bei der Erstmontage der Bremse als auch bei einem Teileaustausch. Die dritte Dichteinrichtung steigert noch einmal die Redundanz und damit die Wirksamkeit des insgesamt vorgesehenen Dichtungssystems. Der Halteeinrichtung kommen dabei zwei Funktionen zu, nämlich zum einen das Halten der zweiten Dichteinrichtung und zum anderen das Zusammenwirken mit der dritten Dichteinrichtung zum Abdichten des Ringraums, weil die dritte Dichteinrichtung an der Halteeinrichtung anliegt. Damit kommt der Halteeinrichtung besondere Bedeutung für das Dichtsystem zu.

Erfindungsgemäß bevorzugt handelt es sich bei der Durchgangsöffnung um eine Funktionsöffnung. Mit anderen Worten erstreckt sich durch die Durchgangsöffnung mindestens ein Element der Bremse, das zur Funktion der Bremse beiträgt. Dabei kann es sich beispielsweise um den Druckbund einer Nachstellmutter und/oder um einen Druckstempel handeln, der darüber hinaus als Druckspindel ausgestaltet sein kann.

Erfindungsgemäß weist die sich durch die Durchgangsöffnung hindurcherstreckende Einrichtung einen Druckbund und/oder eine Nachstellspindel auf.

Die Halteeinrichtung ist nach einer besonders bevorzugten Ausführungsform der Erfindung hülsenförmig ausgestaltet. Dadurch ergibt sich eine besonders einfache Handhabung sowohl bei der Erstmontage als auch beim Teileaustausch.

Die zweite Dichteinrichtung ist im Querschnitt erfindungsgemäß bevorzugt T-förmig. Dabei dient der dem senkrechten Balken des "T" entsprechende Teil der Dichteinrichtung bevorzugt der besonders zuverlässigen Abdichtung des Ringraums, während der dem Querbalken entsprechende Teil der Festlegung der Dichteinrichtung innerhalb der Bremse dient.

Die Halteeinrichtung koppelt erfindungsgemäß weiter bevorzugt die zweite Dichteinrichtung in Umfangsrichtung und/oder in Axialrichtung der Bremse mit der sich durch die Durchgangsöffnung hindurcherstreckenden Einrichtung. So dreht sie sich insbesondere beispielsweise beim Nachstellen der Bremse mit dem Druckbund mit.

Nach einer weiter bevorzugten Ausführungsform der Erfindung ist vorgesehen, daß die sich durch die Durchgangsöffnung hindurcherstreckende Einrichtung und/oder die Nachstelleinrichtung ein Außengewinde aufweist/aufweisen, das sich bei Übergang von einem ersten in einen zweiten Betriebszustand in die zweite Dichteinrichtung einschneidet.

So kann beispielsweise erreicht werden, daß sich das Außengewinde beim ersten Kontakt, d.h. beim Übergang vom Neuzustand in einen anderen Betriebszustand, in die zweite Dichteinrichtung einschneidet. Dadurch legt sich die Dichteinrichtung selbständig an die Flanken des Außengewindes an. Dies geschieht gleichfalls bei Verwendung eines Mehrganggewindes. Dies macht automatisierte Montageabläufe einfacher bzw. überhaupt erst möglich.

Erfindungsgemäß bevorzugt ist derjenige Bereich der zweiten Dichteinrichtung, in den das Außengewinde einschneidet, derart ausgestaltet und/oder gehalten, daß er sich nicht infolge einer Relativbewegung bezüglich des Außengewindes verwindet.

Dazu kann insbesondere eine entsprechende Dimensionierung (radiale Länge) des einschlägigen Teils (senkrechter Balken des "T") beitragen.

Die Halteeinrichtung, die zweite Dichteinrichtung und mindestens ein Teil der sich durch die Durchgangsöffnung hindurcherstreckenden Einrichtung, insbesondere der Druckbund, bilden nach einer weiter bevorzugten Ausführungsform der Erfindung eine vormontierte Baugruppe. Dies vereinfacht die Handhabung bei der Erstmontage und beim Teileaustausch.

Weiter bevorzugt ist die Baugruppe durch Verpressen vormontiert. Dies dient ebenfalls zur Vereinfachung des Produktions- und/oder Austauschprozesses.

Weiter bevorzugt ist erfindungsgemäß ein Fettreservoir vorgesehen, das von der zweiten Dichteinrichtung begrenzt ist. Andere Begrenzungen des Fettreservoirs können von einem Druckblock und/oder einer Druckspindel mit Außengewinde gebildet sein. Dadurch können Reibwertschwankungen bei aufeinander gleitenden Teilen vermieden werden.

Dabei liegt erfindungsgemäß weiter bevorzugt die dritte Dichteinrichtung flächig an einem Abschnitt der Innenwand der Durchgangsöffnung an. Dies steigert die Verläßlichkeit der Abdichtung.
Dabei weist die dritte Dichteinrichtung erfindungsgemäß weiter bevorzugt einen radial nach außen über die Innenwand der Durchgangsöffnung überstehenden Abschnitt auf. Dadurch ist sie in Axialrichtung der Bremse festgelegt.

Die dritte Dichteinrichtung ist erfindungsgemäß weiter bevorzugt ringförmig. Damit ist sie dem Ringraum angepaßt.

Ein Innendurchmesser der dritten Dichteinrichtung ist erfindungsgemäß bevorzugt im Ruhezustand kleiner als ein Außendurchmesser der Halteeinrichtung. In montiertem Zustand wird sich daher die dritte Dichteinrichtung auf den Außenmantel der Halteeinrichtung auflegen, was den Dichteffekt steigert.

Erfindungsgemäß weiter bevorzugt weist die dritte Dichteinrichtung radial innen eine Dichtlippe auf. Diese Dichtlippe ist insbesondere dazu gedacht, sich auf den Außenmantel der Halteeinrichtung aufzulegen, um den Ringraum wirkungsvoll abzudichten.

Erfindungsgemäß weiter bevorzugt ist die dritte Dichteinrichtung zumindest abschnittweise elastisch. Die elastische Rückstellkraft kann zum besseren Abdichten verwendet werden.

Erfindungsgemäß kann vorgesehen sein, daß die dritte Dichteinrichtung eine Bewehrung aufweist, insbesondere in Form eines eingelagerten Metallrings. Dieser wird insbesondere zu Schutz- und Stabilisierungszwecken eingesetzt und unterstützt somit auch die Halte- und Abdichtfunktion an der Außenfläche der Durchgangsöffnung.

Erfindungsgemäß bevorzugt ist/sind die zweite Dichteinrichtung, die dritte Dichteinrichtung und/oder die Halteeinrichtung rotationssymmetrisch ausgeführt. Dadurch brauchen sie bei der Montage nicht in eine spezielle Drehposition gebracht zu werden.

Bevorzugt hat ein Oberflächenbereich der Halteeinrichtung, an dem die dritte Dichteinrichtung anliegt, eine das Abdichten fördernde Glattheit. Insbesondere ist die Halteeinrichtung aus Metall. Die Halteeinrichtung mit besonders glatter Oberfläche auszugestalten ist wesentlich weniger aufwendig als eine entsprechende Ausgestaltung beispielsweise des Druckbundes. Die glatte Oberfläche ist aber insbesondere bei Ausgestaltungen vorteilhaft, bei denen die dritte Dichteinrichtung im Betrieb der Bremse bezüglich der mit ihr zusammenwirkenden Fläche, also insbesondere der Halteeinrichtung bewegt wird.

Bei der erfindungsgemäßen Scheibenbremse stützt sich die Zuspannwelle vorteilhaft auf ihrer Zuspannseite an einem Druckblock ab.

Ferner weist die Nachstelleinrichtung vorteilhaft eine Nachstellmutter und eine Nachstellspindel auf.

Die Durchgangsöffnung kann an dem Hauptkörper des Bremssattels oder an einem Deckel des Bremssattels ausgebildet sein.

Bevorzugt bildet der Deckel mit der dritten Dichteinrichtung eine vormontierte Baugruppe. Wird er montiert, schiebt sich die dritte Dichteinrichtung auf die Halteeinrichtung, wodurch die Montage weiter vereinfacht ist.

Schließlich schafft die Erfindung bevorzugt eine pneumatisch und/oder elektromechanisch betätigbare Nutzfahrzeugscheibenbremse, mit einer Bremsscheibe, einem Bremssattel, einer mittels eines Schwenkhebels betätigbaren und quer zu einer Drehachse der Bremsscheibe liegenden Zuspannwelle, einer Nachstelleinrichtung, die zumindest teilweise innerhalb eines Innenraums des Bremssattels angeordnet ist, einer ersten Dichteinrichtung zum Abdichten eines Ringraums, der von der Innenwand einer Durchgangsöffnung des Bremssattels und einer sich durch die Durchgangsöffnung hindurcherstreckenden Einrichtung begrenzt ist, einer Halteeinrichtung, die eine zweite Dichteinrichtung zum zumindest teilweisen Abdichten des Ringraums hält, und einer dritten Dichteinrichtung, die zum zumindest teilweisen Abdichten des Ringraums an der Halteeinrichtung anliegt, dadurch gekennzeichnet, daß die sich durch die Durchgangsöffnung hindurcherstreckende Einrichtung einen Druckbund einer Nachstellmutter aufweist und die Halteeinrichtung, die zweite Dichteinrichtung und der Druckbund eine vormontierte Baugruppe bilden.

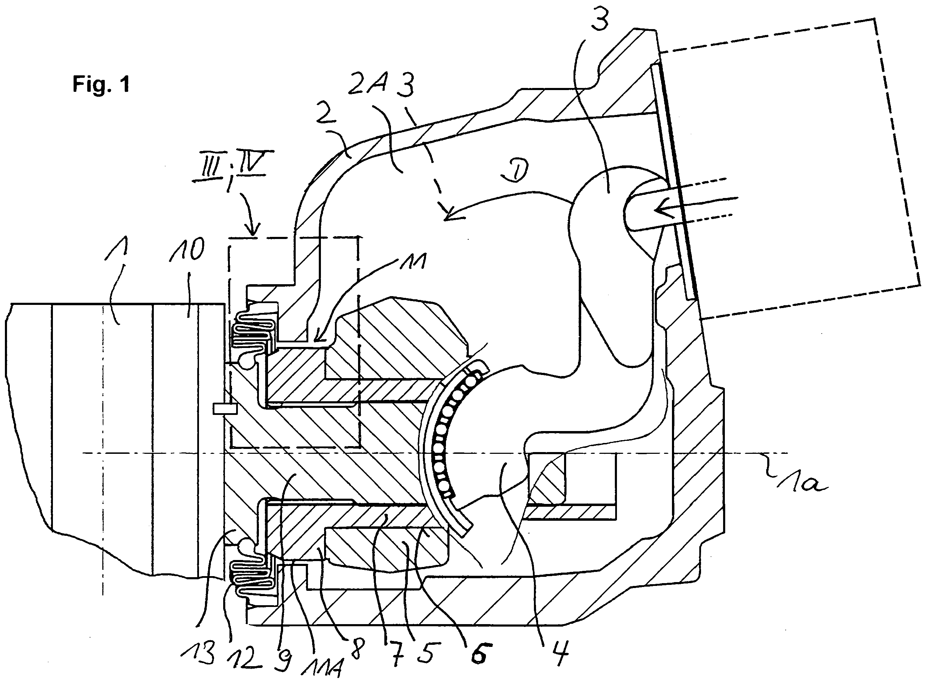

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische Schnittansicht eines Ausführungsbeispiels der Scheibenbremse nach der Erfindung,

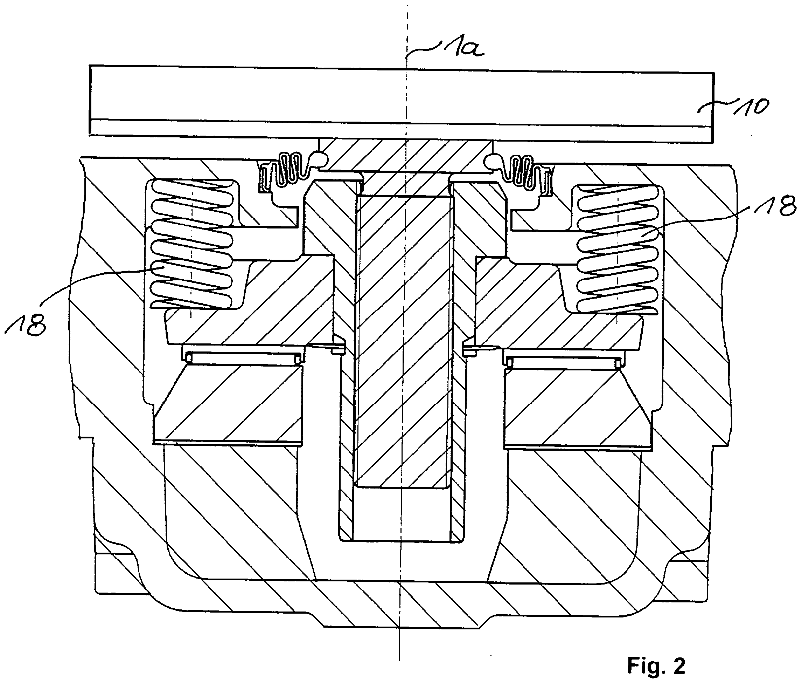

- Figur 2: eine weitere schematische Schnittansicht des Ausführungsbeispiels nach Figur 1,
- Figur 3: eine schematische perspektivische Teilschnittansicht eines Teils des Ausführungsbeispiels nach Figur 1 in der Anfangsstellung und
- Figur 4: eine weitere schematische perspektivische Teilschnittansicht eines Teils des Ausführungsbeispiels nach Figur 1 bei teilweise ausgeschraubter Druckspindel.

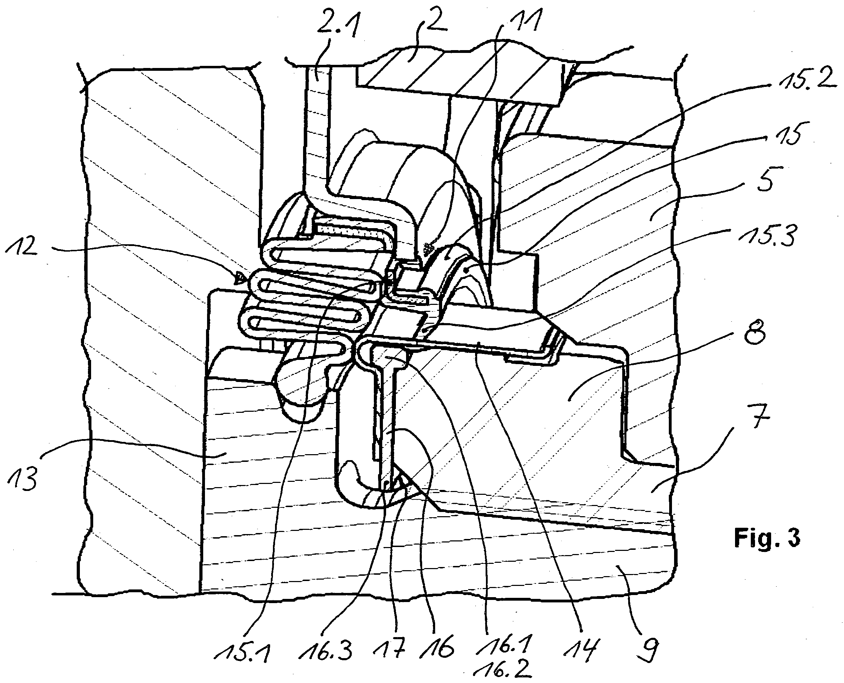

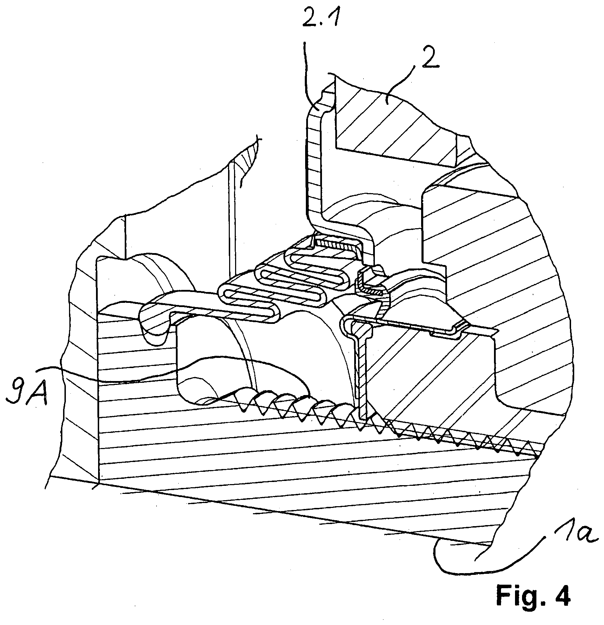

Bei der in der Zeichnung dargestellten Bremse handelt es sich um eine Nutzfahrzeugscheibenbremse mit einem eine Bremsscheibe 1 umfassenden Bremssattel 2, an dem sich eine mittels eines schwenkbaren Drehhebels 3 zu betätigende und quer zu einer Drehachse 1A der Bremsscheibe 1 liegende Zuspannwelle 4 abstützt. Die Zuspannwelle 4 wirkt auf einen drehfest gelagerten und sich quer zur Bremsscheibe 1 erstreckenden Druckblock 5 ein. Der Druckblock 5 weist eine Durchgangsöffnung 6 auf, in der eine zu einer Nachstelleinrichtung gehörende drehbare Nachstellmutter 7 mit einem zur Bremsscheibe 1 weisenden Druckbund 8 aufgenommen ist. In die Nachstellmutter 7 ist eine nicht um die Drehachse 1A drehbare Druckspindel 9 mit einem Außengewinde 9A eingeschraubt. Sie drückt bei Betätigung der Bremse gegen einen zuspannseitigen Bremsbelag 10. Der Zuspannhebel 3, die Zuspannwelle 4, der Druckblock 5, die Nachstellmutter 7 und die Druckspindel 9 sind (zumindest teilweise) in einem Innenraum 2A des Bremssattels 2 aufgenommen. Dabei weist der Bremssattel 2 zur Bremsscheibe 1 hin weisend eine Funktionsöffnung 11 auf, in die sich der Druckbund 8 der Nachstellmutter 7 und die Druckspindel 9 hinein- bzw. hindurcherstrecken. Dabei liegt zwischen der Innenwand der Durchgangsöffnung 11 des Sattels 2 und dem Druckbund 8 bzw. der Druckspindel 9 ein Ringraum 11A. Zur Abdichtung dieses Ringraums dient eine elastische Schutzkappe in Form einer Faltenmanschette 12. Sie ist einerseits an dem Bremssattel 2 oder nach Figuren 3 und 4 an einem am Bremssattel befestigbaren Deckel 2.1 und andererseits an einem der Bremsscheibe 1 zugewandten Teil 13 der Druckspindel 9 angebracht. Der Druckblock 5 stützt sich an der Zuspannseite des Druckbundes ab.

Der sich in die Funktionsöffnung 11 erstreckende Bereich des Druckbundes 8 der Nachstellmutter 7 dient zur formschlüssigen Befestigung eines den axialen und radialen Druckbundbereich umschließenden Hülsenkörpers 14, der einerseits eine Dichtfläche gegenüber einer den Innenraum 2A schützenden Dichtung 15 bildet und der gleichzeitig der Halterung einer das Außengewinde 9A der Druckspindel 9 schützenden Dichtung 16 dient. Die Dichtung 15 liegt im radial äußeren Teil des Ringraumes 11A, die Dichtung 16 im radial inneren Teil.

Mit anderen Worten kommt dem Druckbund 8 mit der darauf befestigten Dichtungs- und Befestigungshülse in Form des Hülsenkörpers 14 besondere Bedeutung für die Ausführung und Anordnung des erfindungsgemäßen redundanten Dichtsystems zu.

Die Dichtung 15 ist aus einem elastischen Werkstoff. Sie ist derart ausgelegt, daß sie in eingebautem Zustand die Funktionsöffnung 11 ganzflächig und zu beiden Seiten ringförmig und abdichtend umgreift. Dazu ist auf der dem Bremsbelag 10 zugewandten Seite ein in das Dichtungsmaterial eingelagerter Metallring 15.1 vorgesehen, der in dem dargestellten Ausführungsbeispiel L-förmig ist. Er hat Schutz- und Stabilisierungsfunktion. Darüber hinaus ermöglicht er auch Vereinfachungen beim Einbau, insbesondere einen automatisierten Einbau. Auf der dem Innenraum 2A zugewendeten Seite ist ein Ringwulst 15.2 vorgesehen, der radial nach außen über die Funktionsöffnung 11 übersteht. Damit ist die Dichtung 15 verläßlich an der Funktionsöffnung 11 gehalten.

Radial einwärts ist die Dichtung 15 mit einer elastischen Ringraumlippe 15.3 versehen. Deren Innendurchmesser ist kleiner als der Außendurchmesser des Hülsenkörpers 14. Mit anderen Worten ist die Radialausdehnung der Ringraumlippe 15.3 derart bemessen, daß sie den Hülsenkörper 14 ganzflächig umgreift. Sie legt sich nämlich in montiertem Zustand flächig an den Außenmantel des Hülsenkörpers 14 an. Wegen ihrer Elastizität kann sie als ortsfeste Ringraumdichtung axiale, radiale und rotatorische Bewegungen ohne Dichtungsverlust ausgleichen, die der Druckbund 8 der Nachstellmutter 7 mit dem Hülsenkörper 14 während des Bremsens und beim Nachstellen ausführt.

Die Mantelfläche der vorzugsweise aus Metall hergestellten Haltehülse, an der die Ringraumlippe 15.3 in montiertem Zustand anliegt, ist sehr glatt. Diese Mantelfläche glatt auszugestalten ist wesentlich weniger aufwendig als bei anderen Elementen der Bremse, beispielsweise bei dem Druckbund 8. Die Haltehülse 14 bietet eine optimale Dichtfläche und in Verbindung mit der elastischen (Ringraum-)Dichtung 15 einen sicheren Mehrfachschutz des Innenraums 2A der Scheibenbremse. Dabei dient sie bei dem in der Zeichnung dargestellten Ausführungsbeispiel der Erfindung gleichzeitig der Halterung der Dichtung 16. Mithin kommt ihr eine Mehrfachfunktion zu.

Damit auch das Außengewinde 9A und damit der von der Nachstellmutter 7 und der Druckspindel 9 gebildete Spindeltrieb wirkungsvoll geschützt sind, ist die elastische Dichtung 16 vorgesehen. Sie ist in axialer und radialer Position durch den Hülsenkörper 14 an der dem Bremsbelag 10 zugewendeten Stirnfläche des Druckbundes 8 festgelegt. Sie dreht sich mit der Nachstellmutter 7. Dafür ist sie im Querschnitt T-förmig ausgestaltet. Dadurch ergeben sich beidseitig am Außenumfang in Richtung des Druckbundes 8 und des Hülsenkörpers 14 Wulstbereiche 16.1, 16.2, die allseitig abdichten.

Von besonderer Bedeutung ist die sehr schmal bauende und in Richtung des Außengewindes 9A der nicht drehbaren Druckspindel 9 sich erstreckende Dichtfläche/-lippe 16.3. Dieser Bereich der Dichtung 16 ist hinsichtlich des verwendeten Materials und der Dimensionierung derart bemessen, daß sich beim ersten Kontakt mit dem Gewindeanfang das Außengewinde 9A darin einschneidet. Damit legt sich der innere Dichtbereich der Dichtung 16 selbsttätig an die Gewindeflanken an. Somit wird eine optimale Gewindeabdichtung auch in radialer Lage erzeugt, was insbesondere bei mehrgängigen Gewinden sehr wirkungsvoll ist. Dies ist insbesondere im Hinblick auf automatisierte Montagen vorteilhaft.

Ein weiterer Vorteil resultiert aus der vergleichsweise großen Anlagefläche zwischen dem der Halterung dienenden Bereich des Hülsenkörpers 14 und der Dichtfläche/-lippe 16.3 in Richtung Gewindeverlauf. Dadurch wird nämlich dieser Bereich vergleichsweise großflächig, weshalb er sich bei Relativbewegungen bezüglich des Außengewindes 9A nicht verwindet.

Die Dichtung 16 ist mit der Haltehülse 14 als vormontierte Baugruppe mit dem Druckbund 8 verpreßt, um anschließend mit den restlichen Teilen komplettiert zu werden. Dies vereinfacht den Einbauvorgang erheblich.

Da die Dichtungen 15 und 16 sich in ihren Einbaulagen während des Betriebs nicht oder nur kaum verändern und in Radialrichtung annährend übereinander liegen, werden die sehr engen Bauräume in der Bremse optimal genutzt. Die erwähnten Dichtungs- und Lagerungs-/Halteteile sind rotationssymmetrisch. Dadurch brauchen keine speziellen Ausführungformen in dementsprechend spezielle Einbaupositionen gebracht zu werden.

Die axiale Einbaulänge des Hülsenkörpers 14 ist derart bemessen, daß bei vorher eingelegter Dichtung 16 und anschließendem Verpressen auf den Druckbund 8 keine Gefahr besteht, daß die Dichtung 16 zerquetscht wird. Dies wird durch Blockmaß gegenüber dem Ende des Druckbundes bei der Baugruppenmontage erreicht. Zwischen dem Außengewinde 9A, dem Druckbund 8 und der Dichtung 16 ist ein Fettreservoir 17 ausgebildet. Dies dient zur Vermeidung von Reibwertschwankungen bei Bewegungen der genannten Elemente bezüglich einander.

Die Funktionsöffnung 11 ist bei dem dargestellten Ausführungsbeispiel an dem Hauptkörper des Bremssattels 2 angeordnet. Sie kann aber auch an einem Deckel des Bremssattels 2 vorgesehen sein.

Die in der Zeichnung dargestellte Bremse wird durch Schwenkbewegungen des Drehhebels 3 betätigt, wenn über eine beispielsweise an dem Bremssattel 2 angeflanschte Betätigungseinrichtung ein Bremsvorgang eingeleitet wird. Unter Einbeziehung des Druckblocks 5, in dem wenigstens eine Nachstellmutter-/Druckspindelanordnung gelagert ist, erfolgt eine Verschiebung in Richtung des Bremsbelages 10. Bei Bremsentlastung schiebt ein (Druck-)Federsystem 18 die ganze Zuspannvorrichtung wieder in die Ausgangslage. Bei reinen Axialbewegungen gleitet somit die Ringraumlippe 15.3 über den außen liegenden Bereich des Hülsenkörpers 14. Treten dabei noch über die nicht gezeigte Nachstellvorrichtung erforderliche Nachstellbewegungen auf (siehe Fig. 4), erfolgt eine Drehung der Nachstellmutter 7, und die Druckspindel 9 wird herausgeschraubt. Dabei dreht sich das Außengewinde 9A bezüglich der an der Nachstellmutter 7 bzw. dem Druckbund 8 gehaltenen Dichtung 16 bzw. gegenüber der an den Gewindeflanken anliegenden Dichtfläche/-lippe 16.3. Selbst wenn die Faltenmanschette 12 beschädigt sein sollte, werden durch die Mehrfachdichtungen der Innenraum 2A des Bremssattels 2 und insbesondere der Spindeltrieb wirkungsvoll geschützt. Bei einem anschließenden Service kann die Faltenmanschette 12 in herkömmlicher Weise ausgetauscht werden. Dies gilt auch bei Bedarf für die Dichtung 15. Wie insbesondere der Fig. 4 zu entnehmen ist, bleiben die Dichtungen 15 und 16 in ihrer Lage unverändert, obwohl die Druckspindel 9 durch Nachstellbewegungen aus der Nachstellmutter 7 herausgeschraubt wird.

Wie den Figuren 3 und 4 zu entnehmen ist, ist der Sattel 2 bremsscheibenseitig mit einem Deckel 2.1 verschlossen. Wenngleich dies der Zeichnung nicht zu entnehmen ist, ist der Deckel 2.1 mit dem Hauptkörper des Sattels 2 beispielsweise verschraubt. Der Deckel 2.1 ist zur weiteren Vereinfachung der Montage mit der dritten Dichteinrichtung 15 vormontiert, bevor er an dem Sattel 2 durch beispielsweise Verschrauben befestigt wird. Beim Verschrauben bzw. Befestigen des Deckels 2.1 mit dem Sattel 2 schiebt sich die "angestellte" dritte Dichteinrichtung 15 auf die Halteeinrichtung 14. Da die dritte Dichteinrichtung 15 in allen Betriebszuständen der Bremse (dauerhaft) nach außen weisend "angestellt" ist bzw. bleibt, wird eine besonders wirksame Dichtfunktion erzielt.

Wenngleich das in der Zeichnung dargestellte Ausführungsbeispiel eine Einspindelbremse ist, ist die Erfindung auch auf Zwei- oder Mehrspindelbremsen anwendbar, weil auch diese Bremsen einem Bremsbelag oder einer Bremsscheibe zugewandte Funktionsöffnungen aufweisen, durch die Funktionselemente hindurchgehen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Pneumatisch und/oder elektromechanisch betätigbare Nutzfahrzeugscheibenbremse, mit
einer Bremsscheibe (1),
einem Bremssattel (2),
einer mittels eines Schwenkhebels (3) betätigbaren und quer zu einer Drehachse (1A) der Bremsscheibe (1) liegenden Zuspannwelle (4),
einer eine Nachstellmutter (7) aufweisenden Nachstelleinrichtung, die zumindest teilweise innerhalb eines Innenraums (2A) des Bremssattels (2) angeordnet ist, und
einer ersten Dichteinrichtung (12) zum Abdichten eines Ringraums (11A), der von der Innenwand einer Durchgangsöffnung (11) des Bremssattels und einer sich durch die Durchgangsöffnung hindurcherstreckenden und einen radial vorstehenden Druckbund (8) der Nachstellmutter aufweisenden Einrichtung (8, 9) begrenzt ist,
**gekennzeichnet durch**
eine am Druckbund (8) angebrachte Halteeinrichtung (14), die eine zweite Dichteinrichtung (16) zum zumindest teilweisen Abdichten des Ringraums hält und
eine dritte Dichteinrichtung (15), die zum zumindest teilweisen Abdichten des Ringraums (11A) an der Halteeinrichtung (14) anliegt.

2. Bremse nach Anspruch 1, **dadurch gekennzeichnet, dass** die Durchgangsöffnung (11) eine Funktionsöffnung ist.

3. Bremse nach Anspruch 1 oder 2, **dadurch gekennzeichnet, dass** die sich durch die Durchgangsöffnung (11) hindurcherstreckende Einrichtung eine Nachstellspindel (7) aufweist.

4. Bremse nach einem der vorangehenden Ansprüche, **dadurch gekennzeichnet, dass** die Halteeinrichtung (14) hülsenförmig ist.

5. Bremse nach einem der vorangehenden Ansprüche, **dadurch gekennzeichnet, dass** die zweite Dichteinrichtung (16) im Querschnitt T-förmig ist.

6. Bremse nach einem der vorangehenden Ansprüche, **dadurch gekennzeichnet, dass** die Halteeinrichtung (14) die zweite Dichteinrichtung (16) in Umfangsrichtung und/oder in Axialrichtung der Bremse mit der sich durch die Durchgangsöffnung (11) hindurcherstreckenden Einrichtung (8) koppelt.

7. Bremse nach einem der vorangehenden Ansprüche, **dadurch gekennzeichnet, dass** die sich durch die Durchgangsöffnung (11) hindurcherstreckende Einrichtung (9) ein Aussengewinde (9A) aufweist/aufweisen, das sich bei Übergang von einem ersten in einen zweiten Betriebszustand in die zweite Dichteinrichtung (16) einschneidet.

8. Bremse nach Anspruch 7, **dadurch gekennzeichnet, dass** derjenige Bereich (16.3) der zweiten Dichteinrichtung (16), in den das Aussengewinde (9A) einschneidet, derart ausgestaltet und/oder gehalten ist, dass er sich nicht infolge einer Relativbewegung bezüglich des Aussengewindes verwindet.

9. Bremse nach einem der vorangehenden Ansprüche, **dadurch gekennzeichnet, dass** die Halteeinrichtung (14), die zweite Dichteinrichtung (16) und mindestens ein Teil der sich durch die Durchgangsöffnung (11) hindurcherstreckenden Einrichtung (8), insbesondere der Druckbund, eine vormontierte Baugruppe bilden.

10. Bremse nach Anspruch 9, **dadurch gekennzeichnet, dass** die Baugruppe (14, 16, 8) durch Verpressen vormontiert ist.

11. Bremse nach einem der vorangehenden Ansprüche, **gekennzeichnet durch** ein Fettreservoir (17), das von der zweiten Dichteinrichtung (16) begrenzt ist.

12. Bremse nach einem der vorangehenden Ansprüche, **dadurch gekennzeichnet, dass** die dritte Dichteinrichtung (15) flächig an einem Abschnitt der Innenwand der Durchgangsöffnung (11) anliegt.

13. Bremse nach einem der vorangehenden Ansprüche, **dadurch gekennzeichnet, dass** die dritte Dichteinrichtung (15) einen radial nach aussen über die Innenwand der Durchgangsöffnung (11) überstehenden Abschnitt (15.1, 15.2) aufweist.

14. Bremse nach einem der vorangehenden Ansprüche, **dadurch gekennzeichnet, dass** die dritte Dichteinrichtung (15) ringförmig ist.

15. Bremse nach einem der vorangehenden Ansprüche, **dadurch gekennzeichnet, dass** ein Innendurchmesser der dritten Dichteinrichtung (15) im Ruhezustand kleiner als ein Aussendurchmesser der Halteeinrichtung (14) ist.

16. Bremse nach einem der vorangehenden Ansprüche, **dadurch gekennzeichnet, dass** die dritte Dichteinrichtung (15) radial innen eine Dichtlippe (15.3) aufweist.

17. Bremse nach einem der vorangehenden Ansprüche, **dadurch gekennzeichnet, dass** die dritte Dichteinrichtung (15) zumindest abschnittweise elastisch ist.

18. Bremse nach einem der vorangehenden Ansprüche, **dadurch gekennzeichnet, dass** die dritte Dichteinrichtung (15) eine Bewehrung (15.1) aufweist.

19. Bremse nach einem der vorangehenden Ansprüche, **dadurch gekennzeichnet, dass** die zweite Dichteinrichtung (16), die dritte Dichteinrichtung (15) und/oder die Halteeinrichtung (14) rotationssymmetrisch ist/sind.

20. Bremse nach einem der vorangehenden Ansprüche, **dadurch gekennzeichnet, dass** ein Oberflächenbereich der Halteeinrichtung (14), an dem die dritte Dichteinrichtung (15) anliegt, eine das Abdichten fordernde Glattheit hat.

21. Bremse nach einem der vorangehenden Ansprüche, **dadurch gekennzeichnet, dass** die Zuspannwelle (4) sich auf ihrer Zuspannseite an einem Druckblock (5) abstützt.

22. Bremse nach einem der vorangehenden Ansprüche, **dadurch gekennzeichnet, dass** die Nachstelleinrichtung eine Nachstellmutter (7) und eine Nachstellspindel (9) aufweist.

23. Bremse nach einem der vorangehenden Ansprüche, **dadurch gekennzeichnet, dass** die Durchgangsöffnung (11) an einem Deckel (2.1) des Bremssattels (2) ausgebildet ist.

24. Bremse nach Anspruch 23, **dadurch gekennzeichnet, dass** der Deckel (2.1) mit der dritten Dichteinrichtung (15) eine vormontierte Baugruppe bildet.

## Claims

1. Pneumatically and/or electromechanically actuable commercial vehicle disc brake, having
a brake disc (1),
a brake calliper (2),
a brake application shaft (4) which can be actuated by means of a pivoting lever (3) and lies transversely with respect to a rotational axis (1A) of the brake disc (1),
an adjusting device which has an adjusting nut (7) and is arranged at least partially within an interior space (2A) of the brake calliper (2), and
a first sealing device (12) for sealing an annular space (11A) which is delimited by the inner wall of the through opening (11) of the brake calliper and a device (8, 9) which extends through the through opening and has a radially projecting thrust collar (8) of the adjusting nut,
**characterized by**
a holding device (14) which is attached to the thrust collar (8) and holds a second sealing device (16) for at least partially sealing the annular space, and
a third sealing device (15) which bears against the holding device (14) for at least partially sealing the annular space (11A).

2. Brake according to Claim 1, **characterized in that** the through opening (11) is a functional opening.

3. Brake according to Claim 1 or 2, **characterized in that** the device which extends through the through opening (11) has an adjusting spindle (7).

4. Brake according to one of the preceding claims, **characterized in that** the holding device (14) is sleeve-shaped.

5. Brake according to one of the preceding claims, **characterized in that** the second sealing device (16) is T-shaped in cross section.

6. Brake according to one of the preceding claims, **characterized in that** the holding device (14) couples the second sealing device (16) in the circumferential direction and/or in the axial direction of the brake to the device (8) which extends through the through opening (11).

7. Brake according to one of the preceding claims, **characterized in that** the device (9) which extends through the through opening (11) has an external thread (9A) which cuts into the second sealing device (16) during a transition from a first into a second operating state.

8. Brake according to Claim 7, **characterized in that** that region (16.3) of the second sealing device (16), into which the external thread (9A) cuts, is configured and/or held in such a way that it does not twist as a consequence of a relative movement with regard to the external thread.

9. Brake according to one of the preceding claims, **characterized in that** the holding device (14), the second sealing device (16) and at least one part of the device (8) which extends through the through opening (11), in particular the thrust collar, form a preassembled module.

10. Brake according to Claim 9, **characterized in that** the module (14, 16, 8) is preassembled by way of being pressed together.

11. Brake according to one of the preceding claims, **characterized by** a grease reservoir (17) which is delimited by the second sealing device (16).

12. Brake according to one of the preceding claims, **characterized in that** the third sealing device (15) bears flatly against a section of the inner wall of the through opening (11).

13. Brake according to one of the preceding claims, **characterized in that** the third sealing device (15) has a section (15.1, 15.2) which projects radially to the outside beyond the inner wall of the through opening (11) .

14. Brake according to one of the preceding claims, **characterized in that** the third sealing device (15) is annular.

15. Brake according to one of the preceding claims, **characterized in that** an internal diameter of the third sealing device (15) in the rest state is smaller than an external diameter of the holding device (14).

16. Brake according to one of the preceding claims, **characterized in that** the third sealing device (15) has a sealing lip (15.3) radially on the inside.

17. Brake according to one of the preceding claims, **characterized in that** the third sealing device (15) is elastic at least in sections.

18. Brake according to one of the preceding claims, **characterized in that** the third sealing device (15) has a reinforcement (15.1).

19. Brake according to one of the preceding claims, **characterized in that** the second sealing device (16), the third sealing device (15) and/or the holding device (14) are/is rotationally symmetrical.

20. Brake according to one of the preceding claims, **characterized in that** a surface region of the holding device (14), against which surface region the third sealing device (15) bears, has a smoothness which promotes the sealing action.

21. Brake according to one of the preceding claims, **characterized in that** the brake application shaft (4) is supported on its brake application side on a pressure block (5).

22. Brake according to one of the preceding claims, **characterized in that** the adjusting device has an adjusting nut (7) and an adjusting spindle (9).

23. Brake according to one of the preceding claims, **characterized in that** the through opening (11) is configured on a cover (2.1) of the brake calliper (2).

24. Brake according to Claim 23, **characterized in that** the cover (2.1) forms a preassembled module with the third sealing device (15).

## Revendications

1. Frein à disque pour véhicule utilitaire à commande pneumatique et/ou électromécanique, avec
un disque de frein (1),
un étrier de frein (2),
un arbre d'actionnement (4) actionnable au moyen d'un levier pivotant (3) et situé transversalement à un axe de rotation (1A) du disque de frein (1),
un dispositif de réglage présentant un écrou de réglage (7), qui est disposé au moins partiellement à l'intérieur d'un espace intérieur (2A) de l'étrier de frein (2), et
un premier dispositif d'étanchéité (12) pour l'étanchéité d'une chambre annulaire (11A), qui est limitée par la paroi intérieure d'une ouverture de passage (11) de l'étrier de frein et un dispositif (8, 9) s'étendant à travers l'ouverture de passage et présentant un rebord de poussée saillant radialement (8) de l'écrou de réglage,
**caractérisé par**
un dispositif de maintien (14) posé sur le rebord de poussée (8), qui maintient un deuxième dispositif d'étanchéité (16) pour l'étanchéité au moins partielle de la chambre annulaire et
un troisième dispositif d'étanchéité (15), qui s'applique sur le dispositif de maintien (14) pour l'étanchéité au moins partielle de la chambre annulaire (11A).

2. Frein selon la revendication 1, **caractérisé en ce que** l'ouverture de passage (11) est une ouverture fonctionnelle.

3. Frein selon la revendication 1 ou 2, **caractérisé en ce que** le dispositif s'étendant à travers l'ouverture de passage (11) présente une broche de réglage (7).

4. Frein selon l'une quelconque des revendications précédentes, **caractérisé en ce que** le dispositif de maintien (14) est en forme de douille.

5. Frein selon l'une quelconque des revendications précédentes, **caractérisé en ce que** le deuxième dispositif d'étanchéité (18) a une section transversale en forme de T.

6. Frein selon l'une quelconque des revendications précédentes, **caractérisé en ce que** le dispositif de maintien (14) couple le deuxième dispositif d'étanchéité (16) en direction périphérique et/ou en direction axiale du frein au dispositif (8) s'étendant à travers l'ouverture de passage (11).

7. Frein selon l'une quelconque des revendications précédentes, **caractérisé en ce que** le dispositif (9) s'étendant à travers l'ouverture de passage (11) présente un filet extérieur (9A), qui s'incruste dans le deuxième dispositif d'étanchéité (16) lors du passage d'un premier à un deuxième état de fonctionnement.

8. Frein selon la revendication 7, **caractérisé en ce que** la région (16.3) du deuxième dispositif d'étanchéité (16), dans laquelle le filet extérieur (9A) s'incruste, est configurée et/ou maintenue de telle manière qu'elle ne se torde pas par suite d'un mouvement relatif par rapport au filet extérieur.

9. Frein selon l'une quelconque des revendications précédentes, **caractérisé en ce que** le dispositif de maintien (14), le deuxième dispositif d'étanchéité (16) et au moins une partie du dispositif (8) s'étendant à travers l'ouverture de passage (11), en particulier le rebord de poussée, forment un module préassemblé.

10. Frein selon la revendication 9, **caractérisé en ce que** le module (14, 16, 8) est préassemblé par pressage.

11. Frein selon l'une quelconque des revendications précédentes, **caractérisé par** un réservoir de graisse (17), qui est limité par le deuxième dispositif d'étanchéité (16).

12. Frein selon l'une quelconque des revendications précédentes, **caractérisé en ce que** le troisième dispositif d'étanchéité (15) repose à plat sur une partie de la paroi intérieure de l'ouverture de passage (11).

13. Frein selon l'une quelconque des revendications précédentes, **caractérisé en ce que** le troisième dispositif d'étanchéité (15) présente une partie (15.1, 15.2) saillante radialement vers l'extérieur au-delà de la paroi intérieure de l'ouverture de passage (11).

14. Frein selon l'une quelconque des revendications précédentes, **caractérisé en ce que** le troisième dispositif d'étanchéité ((15) est de forme annulaire.

15. Frein selon l'une quelconque des revendications précédentes, **caractérisé en ce qu'**un diamètre intérieur du troisième dispositif d'étanchéité (15) à l'état de repos est plus petit qu'un diamètre extérieur du dispositif de maintien (14).

16. Frein selon l'une quelconque des revendications précédentes, **caractérisé en ce que** le troisième dispositif d'étanchéité (15) présente une lèvre d'étanchéité (15.3) radialement à l'intérieur.

17. Frein selon l'une quelconque des revendications précédentes, **caractérisé en ce que** le troisième dispositif d'étanchéité (15) est au moins localement élastique.

18. Frein selon l'une quelconque des revendications précédentes, **caractérisé en ce que** le troisième dispositif d'étanchéité (15) présente une armature (15.1).

19. Frein selon l'une quelconque des revendications précédentes, **caractérisé en ce que** le deuxième dispositif d'étanchéité (16), le troisième dispositif d'étanchéité (15) et/ou le dispositif de maintien (14) présente(nt) la symétrie de révolution.

20. Frein selon l'une quelconque des revendications précédentes, **caractérisé en ce qu'**une région de la surface du dispositif de maintien (14), sur laquelle le troisième dispositif d'étanchéité (15) est appliqué, présente une planéité, qui favorise l'étanchéité.

21. Frein selon l'une quelconque des revendications précédentes, **caractérisé en ce que** l'arbre d'actionnement (4) s'appuie par son côté d'actionnement sur un bloc de poussée (5).

22. Frein selon l'une quelconque des revendications précédentes, **caractérisé en ce que** le dispositif de réglage présente un écrou de réglage (7) et une broche de réglage (9).

23. Frein selon l'une quelconque des revendications précédentes, **caractérisé en ce que** l'ouverture de passage (11) est formée sur un couvercle (2.1) de l'étrier de frein (2).

24. Frein selon la revendication 23, **caractérisé en ce que** le couvercle (2.1) forme avec le troisième dispositif d'étanchéité (15) un module préassemblé.
